# EUROPÄISCHE PATENTSCHRIFT

(11) **EP 1 117 254 B1**
(45) Veröffentlichungstag und Bekanntmachung des Hinweises auf die Patenterteilung: **24.08.2005**
(21) Anmeldenummer: 01100067.6
(22) Anmeldetag: 10.01.2001
(51) Int. Cl.: H04N 5/50, H03J 1/00

(54) **Verfahren zum Wechseln des Kanals einer Fernsehempfangsvorrichtung und entsprechende Fernsehempfangsvorrichtung**
Method for changing the channel of a television receiver and corresponding television receiver apparatus
Méthode pour changer le canal d'un récepteur de télévision et récepteur de télévision correspondant

(30) Priorität: 12.01.2000 DE 10000961
(43) Veröffentlichungstag der Anmeldung: 18.07.2001
(73) Patentinhaber: Micronas GmbH, 79108 Freiburg (DE)
(72) Erfinder: Wendel, Dirk, 82008 Unterhaching (DE); Scheffler, Günter, 80939 München (DE); Schu, Markus, 85435 Erding (DE)
(74) Vertreter: Patentanwälte Westphal, Mussgnug & Partner

(56) Entgegenhaltungen:
- EP-A- 0 572 090
- US-A- 5 699 125
- US-A- 5 757 441
- US-A- 5 886 746

## Beschreibung

Die vorliegende Erfindung betrifft ein Verfahren zum Wechseln des Kanals einer Fernsehempfangsvorrichtung nach dem Oberbegriff des Anspruches 1 sowie eine entsprechende Fernsehempfangsvorrichtung nach dem Oberbegriff des Anspruches 12.

Die zunehmende Anzahl von empfangbaren Fernsehkanälen und die zunehmende Sendung von Werbung veranlassen viele Fernsehzuschauer, nicht nur ein Fernsehprogramm bzw. einen Fernsehkanal zu empfangen, sondern schnell nacheinander zwischen verschiedenen Fernsehkanälen umzuschalten. Damit die Kanalauswahl für den Fernsehzuschauer möglichst einfach ist, ist auf den Fernbedienungen der meisten erhältlichen Fernsehgeräte neben den Nummerntasten zur direkten Kanalwahl auch eine sogenannte "Up"-Taste und eine "Down"-Taste vorgesehen. Mit Hilfe der "Up"-Taste kann der Fernsehzuschauer vom aktuell eingestellten Kanal auf den nächsthöheren Kanal umschalten, während mit der "Down"-Taste ein Wechsel zu dem nächstniedrigeren Kanal möglich ist. Der Fernsehzuschauer kann somit lediglich durch Betätigung der "Up"- oder "Down"-Taste nacheinander zwischen sämtlichen empfangbaren Kanälen umschalten.

Bei einem Wechsel von einem Kanal zu einem anderen Kanal kann jedoch das dem neuen Kanal entsprechende Fernsehbild nicht sofort korrekt dargestellt werden, da nach einem Kanalwechsel in dem Fernsehgerät erst mehrere Regelungen auf den neuen Kanal einschwingen müssen. Dies betrifft insbesondere Regelungen in der Empfangseinrichtung und der Ablenkeinheit des Fernsehgeräts. Die für den Einschwingvorgang benötigte Zeit hängt im wesentlichen von den in dem jeweiligen Fernsehgerät verwendeten Komponenten oder Einzelbausteinen ab.

Ein Fernsehsignal enthält neben den eigentlichen Bildinformationen u.a. horizontale und vertikale Synchroninformationen, welche in einem Tuner und einem Farbdecoder Regelschleifen ("Phase Locked Loop", PLL) anregen, um sogar gestörte Signale ohne größere Bildbeeinträchtigung verarbeiten zu können. Am Ausgang des Farbdecoders stehen somit u.a. ein störbefreites Horizontalsignal und ein störbefreites Vertikalsignal zur Verfügung. Bei einem Kanalwechsel dauert es eine gewisse Zeitspanne, bis dieses Horizontalsignal und Vertikalsignal zu dem neu empfangenen Viodesignal passen. Diese Zeitspanne ist umso länger, je größer die Phasen- und Frequenzabweichungen zwischen den entsprechenden Signalen des alten Kanals und den Signalen des neuen Kanals sind. Sollten die Signale des neuen Kanals zufälligerweise dieselbe Phasenlage und dieselbe Frequenz wie die Signale des alten Kanals besitzen, sind die Regelschleifen des Fernsehgeräts bereits korrekt eingeschwungen. Dies ist jedoch ein Sonderfall, der in der Praxis nur äußerst selten auftritt.

Auch die dem Farbträger zugeordnete Regelschleife des Fernsehgeräts muß bei einem Kanalwechsel auf die neue Frequenz und Phasenlage des neuen Farbträgers einschwingen und gegebenenfalls sogar auf einen neuen Fernsehstandard eingestellt werden, falls sich der Fernsehstandard des neu eingestellten Kanals von demjenigen des alten Kanals unterscheidet.

Schließlich muß auch die für einen Kanalwechsel erforderliche Einschwingzeit des Tuners des Fernsehgeräts berücksichtigt werden, da erst nach dem Einschwingen des Tuners auf den neuen Kanal das entsprechende Fernsehsignal stabil zur weiteren Verarbeitung vorliegt.

Aus den zuvor beschriebenen Gründen wird der Bildschirm des Fernsehgeräts bei einem Kanalwechsel daher üblicherweise vorübergehend dunkelgetastet, bis sich die Regelungen des Fernsehgeräts auf den neuen Kanal eingeschwungen haben und somit ein korrekter Empfang des neuen Kanals und eine korrekte Wie-Wiedergabe des entsprechenden Fernsehbildes möglich ist. Diese Zeit erscheint vielen Fernsehzuschauern jedoch subjektiv zu lang.

Neben Fernsehgeräten mit lediglich einer Empfangseinrichtung sind auch Fernsehgeräte mit zwei oder mehr Empfangseinrichtungen, die jeweils einen Tuner und einen Farbdecoder aufweisen, erhältlich. Mit den beiden Empfangseinrichtungen werden die Fernsehsignale unterschiedlicher Kanäle empfangen, wobei die den beiden Kanälen entsprechenden Fernsehsignale auf dem Bildschirm in Form von überlagerten oder nebeneinander dargestellten Fernsehbildern wiedergegeben werden. Diese Funktionen sind als "Bild-in-Bild"-Funktion ("Picture in Picture", PIP) oder "Double Window"-Funktion bekannt, wobei diese Funktionen jedoch nicht für einen schnelleren Kanalwechsel genutzt werden.

Die US 5,699,125 beschreibt ein Verfahren zum Speichern eines elektronischen Programmführers. Bei diesem Verfahren dient ein erster Fernsehempfänger (tuner) zum Empfang der Bildinformationen eines von dem Benutzer ausgewählten Kanals, während ein zweiter Fernsehempfänger dazu dient, elektronische Programminformationen zu bevorzugten abgespeicherten Kanälen regelmäßig abzurufen, um stets einen aktualisierten elektronischen Programmführer für die bevorzugten Kanäle bereit zu halten.

Der vorliegenden Erfindung liegt die Aufgabe zugrunde, ein Verfahren zum Wechseln des Kanals einer Fernsehempfangsvorrichtung sowie eine entsprechende Fernsehempfangsvorrichtung vorzuschlagen, wobei die für einen Kanalwechsel benötigte Zeit verkürzt werden kann und lange Dunkeltastungen des Bildschirms beim Umschalten von einem aktuell eingestellten Kanal auf einen neuen Kanal vermieden werden können.

Diese Aufgabe wird erfindungsgemäß durch ein Verfahren mit den Merkmalen des Anspruches 1 bzw. eine Fernsehempfangsvorrichtung mit den Merkmalen des Anspruches 12 gelöst. Die Unteransprüche definieren vorteilhafte und bevorzugte Ausführungsformen der vorliegenden Erfindung.

Erfindungsgemäß sind mehrere Empfangseinrichtungen vorgesehen, wobei eine dieser Empfangseinrichtungen vorausschauend auf einen Kanal eingestellt wird, von dem erwartet wird, daß er in Zukunft infolge eines Kanalwechsels eingestellt werden soll. Der voreingestellte Kanal kann dabei abhängig von dem in der Vergangenheit gezeigten Kanalwechselverhalten des Fernsehzuschauers gewählt werden. Insbesondere bietet es sich an, diese Empfangseinrichtung im voraus auf den nächstniedrigeren Kanal bzw. nächsthöheren Kanal einzustellen, falls mit dem vorhergehenden Kanalwechsel auf einen niedrigeren bzw. höheren Kanal umgeschaltet worden ist, da erfahrungsgemäß der Fernsehzuschauer häufig die empfangbaren Kanäle nacheinander durchschaltet.

Wird anschließend tatsächlich der bereits im voraus eingestellte Kanal ausgewählt, kann auf die voreingestellte Empfangseinrichtung umgeschaltet werden, die bereits auf den neuen Kanal eingeschwungen ist, so daß die für den Kanalwechsel benötigte Zeit deutlich verkürzt und eine vorübergehende fehlerhafte oder schwarze Darstellung des Fernsehbildes vermieden werden kann.

Schaltet der Fernsehzuschauer auf einen anderen als den erwarteten und im voraus eingestellten Kanal um, kann vorzugsweise die auf den falschen Kanal voreingestellte Empfangseinrichtung auf den tatsächlich ausgewählten Kanal eingestellt werden, während mit der augenblicklich aktiven Empfangseinrichtung weiterhin das Fernsehbild des aktuell eingestellten Kanals dargestellt wird, bis die zuvor genannten Empfangseinrichtung auf den neuen Kanal eingeschwungen ist. Erst dann erfolgt das tatsächliche Umschalten auf den neuen Kanal, so daß zwar durch diese Vorgehensweise nicht die Zeitspanne zwischen dem Drücken der entsprechenden Kanalwahltaste an der Fernbedienung und der Darstellung des dem neuen Kanal entsprechenden Fernsehbildes verkürzt werden kann; die im Hintergrund ablaufenden Einschwingvorgänge bleiben jedoch dem Fernsehzuschauer verborgen und eine Dunkeltastung des Bildschirms wird vermieden, da vorübergehend weiterhin das dem alten Kanal entsprechende Fernsehprogramm angezeigt wird. In diesem Fall kann jedoch die Ausgabe entsprechender Informationen an den Fernsehzuschauer, insbesondere das Einblenden eines entsprechenden Hinweises, sinnvoll sein, um dem Zuschauer gegenüber zu bestätigen, daß sein Kanalwechselwunsch empfangen worden ist.

Gemäß einem weiteren Ausführungsbeispiel der vorliegenden Erfindung kann eine der vorhandenen Empfangseinrichtungen auch für einen Suchlauf genutzt werden, wobei diese Empfangseinrichtung nacheinander auf verschiedene Kanäle eingestellt und jeweils ein dem augenblicklich eingestellten Kanal entsprechendes Fernsehbild zusammen mit dem Hauptbild der aktiven Empfangseinrichtung dargestellt wird. Wird durch den Sendersuchlauf ein für den Zuschauer interessanter Kanal angezeigt, kann der Zuschauer den Suchlauf durch Betätigung einer entsprechenden Taste der Fernbedienung bzw. gegebenenfalls auch durch ein akustisches Signal anhalten und einen Kanalwechsel auf den entsprechenden Kanal veranlassen, so daß das diesem Kanal entsprechende Fernsehbild anschließend als Hauptbild angezeigt wird.

Für den oben beschriebenen Suchlauf können sowohl alle empfangbaren Kanäle als auch nur eine bestimmte Anzahl von Kanälen verwendet werden, wobei im zweitgenannten Fall die für den Suchlauf gewünschten Kanäle beispielsweise von dem Zuschauer programmiert oder durch Auswertung einer mit dem Fernsehsignal gesendeten Kennung ermittelt werden. So könne für den Suchlauf z.B. nur Sportsendungen oder nur Spielfilme etc. verwendet werden.

Die vorliegende Erfindung ist sowohl auf analoge als auch auf digitale Fernsehempfänger anwendbar. Die Farbdecoder der einzelnen Empfangseinrichtungen sowie die für die Umschaltung zwischen den Farbdecodern erforderliche Umschalt- und Bildverarbeitungseinrichtung können sowohl in Form separater intergrierter Schaltungen als auch auf einem Chip in Form einer gemeinsamen integrierten Schaltung ausgestaltet sein.

Die Erfindung wird nachfolgend näher anhand eines bevorzugten Ausführungsbeispiels unter Bezugnahme auf die beigefügte Zeichnung erläutert.
Fig. 1 zeigt ein vereinfachtes Blockschaltbild eines erfindungsgemäßen Fernsehgeräts, und
Fig. 2 zeigt eine Darstellung zur Verdeutlichung der Funktionsweise des in Fig. 1 gezeigten Fernsehgeräts.

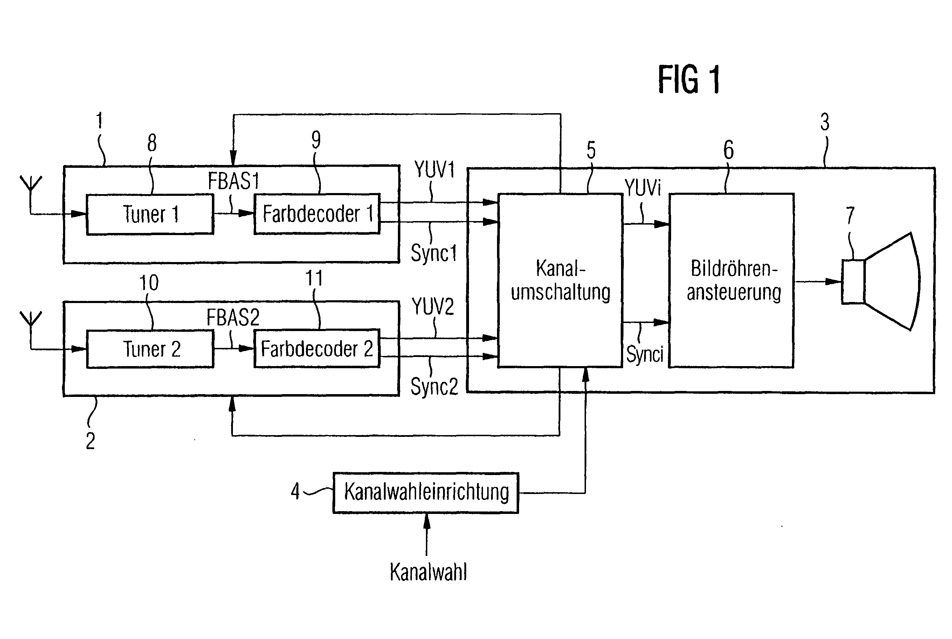

Das in Fig. 1 gezeigte Fernsehgerät umfaßt zwei Empfangseinrichtungen 1, 2, die jeweils einen Tuner 8 bzw. 10 und einen Farbdecoder 9 bzw. 11 umfassen. Von den Tunern wird über eine Empfangsantenne jeweils das einem bestimmten eingestellten Kanal entsprechende Fernsehsignal FBAS1 bzw. FBAS2 empfangen und dem jeweiligen Farbdecoder 9 bzw. 11 zugeführt. Jedes Fernsehsignal enthält neben den eigentlichen Bildinformationen u.a. auch horizontale und vertikale Synchroninformationen. Am Ausgang jedes Farbdecoders 9 bzw. 11 werden daher ein Videosignal YUV1 bzw. YUV2 sowie Synchroninformationen Syncl bzw. Sync2 mit einem störbefreiten Horizontalsignal und einem störbefreiten Vertikalsignal ausgegeben und einer auch Bildverarbeitungsfunktionen wahrnehmenden Umschalteinrichtung 5 einer Wiedergabeeinrichtung 3 zugeführt.

Die Umschalteinrichtung 5 führt eines dieser Video- und Synchronsignale einer Bildröhrenansteuerung 6 zu, die davon abhängig die Bildröhre 7 des Fernsehgeräts entsprechend ansteuert, um ein dem jeweiligen Fernsehsignal entsprechendes Fernsehbild darzustellen, wobei die Umschalteinrichtung für jeden einzelnen Bildpunkt bestimmen kann, welches Fernsehsignal welcher Empfangseinrichtung 1, 2 für den betreffenden Bildpunkt verwendet werden soll. Dies ist insbesondere bei digitalen Fernsehgeräten möglich, die mit Hilfe eines Bildspeichers die Signale synchronisieren können.

Die Umschalteinrichtung 5 kommuniziert beispielsweise über eine I²C-Schnittstelle mit einer Kanalwahleinrichtung 4, die eine z.B. über eine Fernbedienung eingegebene Kanalwahl eines Fernsehzuschauers empfängt und ein entsprechendes Signal an die Umschalteinrichtung 5 weiterleitet, woraufhin die Umschalteinrichtung 5 den gewünschten Kanalwechsel veranlaßt.

Zur Erläuterung der Funktionsweise des in Fig. 1 gezeigten Fernsehgeräts sei nachfolgend angenommen, daß die Empfangseinrichtung 1 augenblicklich aktiv und auf einen von dem Fernsehzuschauer gewünschten Kanal eingestellt ist. Von der Umschalteinrichtung 5 wird daher dafür gesorgt, daß die von der Empfangseinrichtung 1 gelieferten Bildinformationen auf der Bildröhre bzw. dem Bildschirm 7 des Fernsehgeräts angezeigt werden.

Darüber hinaus sorgt die Umschalteinrichtung 5 jedoch auch dafür, daß die zweite Empfangseinrichtung 2 für den Zuschauer unsichtbar auf einen Kanal eingestellt wird, von dem erwartet werden kann, daß auf ihn in Zukunft umgeschaltet werden soll. Schaltet nun der Zuschauer tatsächlich auf diesen von der Umschalteinrichtung erwarteten Kanal um, kann die Umschaltung zwischen der Darstellung des Fernsehbildes des alten Kanals und dem Fernsehbild des neuen Kanals sofort durchgeführt werden, da die erforderlichen Einschwingvorgänge der Empfangseinrichtung 2 bereits im Hintergrund abgelaufen sind, so daß keine Dunkeltastung des Bildschirms 7 bzw. keine kurzzeitige fehlerhafte Darstellung des dem neuen Kanal entsprechenden Fernsehbildes erforderlich ist.

Schaltet hingegen der Zuschauer auf einen anderen als den erwarteten und in der Empfangseinrichtung 2 bereits voreingestellten Kanal um, muß wie bei den herkömmlichen Systemen entweder die Empfangseinrichtung 1 oder die Empfangseinrichtung 2 zunächst auf den neuen Kanal einschwingen.

Vorteilhaft ist jedoch in diesem Fall, wenn die Umschalteinrichtung 5 dafür sorgt, daß vorübergehend weiterhin die von der Empfangseinrichtung 1 gelieferten Signale zur Darstellung eines entsprechenden Fernsehbildes genutzt werden, bis die Empfangseinrichtung 2 auf den neuen Kanal eingeschwungen ist, so daß für den Zuschauer weiterhin das Fernsehprogramm des alten Kanals angezeigt wird, bis mit Hilfe der Empfangseinrichtung 2 ein stabiles und fehlerfreies Fernsehbild des neuen Kanals angezeigt werden kann. Erst dann erfolgt die Umschaltung auf die Empfangseinrichtung 2, wodurch ein dem Fernsehsignal FBAS2 entsprechendes Fernsehbild auf dem Bildschirm 7 dargestellt wird.

Diese Vorgehensweise verkürzt zwar nicht gegenüber herkömmlichen Fernsehgeräten die Zeitspanne zwischen der Eingabe des Kanalwechselwunsches durch den Zuschauer und der tatsächlichen Darstellung des dem neuen Kanal entsprechenden Fernsehbildes auf dem Bildschirm 7; die für den Kanalwechsel erforderlichen Einschwingvorgänge bleiben jedoch dem Zuschauer verborgen, da er vorübergehend weiterhin das dem alten Kanal entsprechende Fernsehprogramm zu sehen bekommt. In diesem Fall kann es sinnvoll sein, wenn von der Umschalteinrichtung 5 durch eine geeignete Bildverarbeitung ein entsprechender Hinweis ("On Screen Display", (OSD)) bis zum tatsächlichen Umschalten des Fernsehbildes auf den neuen Kanal eingeblendet wird, da ansonsten der Zuschauer glauben könnte, daß sein Umschaltwunsch nicht von dem Fernsehgerät empfangen worden ist und daher gegebenenfalls mehrmals die entsprechende Taste auf seiner Fernbedienung drückt.

Bei der zuvor beschriebenen Voreinstellung der augenblicklich nicht benötigten Empfangseinrichtung auf einen erwartungsgemäß in Zukunft benötigten Kanal wird davon ausgegangen, daß der Zuschauer den augenblicklich eingestellten Kanal zumindest solange anschaut, bis die Einschwingvorgänge in der voreingestellten Empfangseinrichtung abgeschlossen sind. Ist dies nicht der Fall, muß bei jedem neuen Kanalwechsel so vorgegangen werden, wies es oben anhand eines Kanalwechsel auf einen nicht erwarteten und daher nicht voreingestellten Kanal beschrieben worden ist.

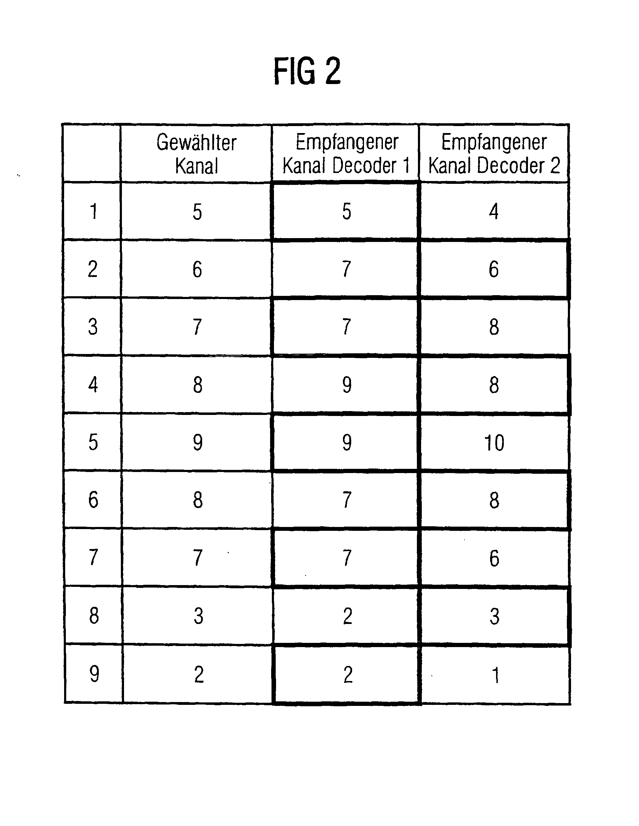

Die zuvor beschriebene Funktionsweise soll nachfolgend näher anhand der in Fig. 2 gezeigten Darstellung erläutert werden, wobei für neun aufeinanderfolgende Kanaleinstellungen bzw. Kanalwechsel jeweils angegeben ist, auf welchen Kanal die Empfangseinrichtung 1 und auf welchen Kanal die Empfangseinrichtung 2 eingestellt werden.

Zunächst wird davon ausgegangen, daß von dem Zuschauer der Kanal mit der Kanalnummer 5 gewählt worden ist. Von der Umschalteinrichtung 5 wird daher veranlaßt, daß die Empfangseinrichtung 1 auf diesen Kanal eingestellt wird, während die Empfangseinrichtung 2 auf einen beliebigen anderen Kanal, beispielsweise den Kanal Nr. 4, eingestellt wird, welcher erwartungsgemäß in Zukunft von dem Zuschauer ausgewählt werden könnte.

Mit dem nächsten Kanalwechsel wird von dem Zuschauer der Kanal Nr. 6 gewählt. Da dieser Kanal in der Empfangseinrichtung 2 nicht voreingestellt worden ist, wird zunächst vorübergehend weiterhin der Kanal Nr. 5 der Empfangseinrichtung 1 angezeigt, bis die Empfangseinrichtung 2 auf den neuen Kanal Nr. 6 eingeschwungen ist. Anschließend erfolgt die Umschaltung des Fernsehbildes auf den Kanal Nr. 6 der Empfangseinrichtung 2, und die Empfangseinrichtung 1 wird auf einen in Zukunft erwarteten Kanal, im vorliegenden Fall auf den Kanal Nr. 7, voreingestellt.

Die Wahl des voreingestellten Kanals erfolgt vorzugsweise abhängig von dem in der Vergangenheit gezeigten Kanalwechselverhalten des Zuschauers. So bietet es sich beispielsweise an, daß die augenblicklich nicht benötigte Empfangseinrichtung nach einem Kanalwechsel auf einen niedrigeren bzw. höheren Kanal anschließend auf den nächstniedrigeren bzw. nächsthöheren Kanal voreingestellt wird, da häufig die einzelnen empfangbaren Kanäle nacheinander durchgeschaltet werden.

Bei dem in Fig. 2 gezeigten Beispiel erfolgt anschließend ein Kanalwechsel auf den Kanal Nr. 7. Da dieser Kanal bereits in der Empfangseinrichtung 1 voreingestellt worden ist, kann ein schneller Kanalwechsel und ein schnelles Umschalten des entsprechenden Fernsehbildes erfolgen. Die Empfangseinrichtung 2 wird danach gemäß dem zuvor beschriebenen Schema auf den Kanal Nr. 8 voreingestellt.

Ebenso ist bei dem nachfolgenden Kanalwechsel auf den Kanal Nr. 8 ein schnelles Umschalten des Fernsehbildes möglich, da die Empfangseinrichtung 2 bereits auf diesen Kanal voreingestellt worden ist. Die Empfangseinrichtung 1 wird auf den Kanal Nr. 9 voreingestellt.

Durch den anschließenden Kanalwechsel wird der bereits in der Empfangseinrichtung 1 eingestellte Kanal Nr. 9 von dem Zuschauer ausgewählt, so daß auch in diesem Fall ein schneller Kanalwechsel durchgeführt werden kann. Die Empfangseinrichtung 2 wird danach auf den Kanal Nr. 10 voreingestellt.

Mit dem nachfolgenden Kanalwechsel wird jedoch der Kanal Nr. 8 ausgewählt, der nicht in der Empfangseinrichtung 2 voreingestellt worden ist. Daher wird zunächst vorübergehend weiterhin der Kanal Nr. 9 der Empfangseinrichtung 1 angezeigt, bis die Empfangseinrichtung 2 auf den neuen Kanal Nr. 8 eingeschwungen ist. Anschließend erfolgt die Umschaltung des Fernsehbildes auf den Kanal Nr. 8 der Empfangseinrichtung 2, und die Empfangseinrichtung 1 wird auf den nachfolgend erwarteten Kanal Nr. 7 voreingestellt.

Durch den anschließenden Kanalwechsel auf den Kanal Nr. 7 wird die Vermutung der Umschalteinrichtung 5 bestätigt, und es kann ein schneller Kanalwechsel durchgeführt werden, da der Kanal Nr. 7 bereits in der Empfangseinrichtung 1 voreingestellt worden ist. Die Empfangseinrichtung 2 wird danach im voraus auf den Kanal Nr. 6 eingestellt.

Mit dem nächsten Kanalwechsel wird jedoch der Kanal Nr. 3 ausgewählt, der nicht in der Empfangseinrichtung 2 voreingestellt worden ist. Daher wird zunächst vorübergehend weiterhin der Kanal Nr. 7 der Empfangseinrichtung 1 angezeigt, bis die Empfangseinrichtung 2 auf den neuen Kanal Nr. 3 eingeschwungen ist. Anschließend erfolgt die Umschaltung des Fernsehbildes auf den Kanal Nr. 3 der Empfangseinrichtung 2, und die Empfangseinrichtung 1 wird auf den anschließend erwarteten Kanal Nr. 2 voreingestellt.

Mit dem nächsten Kanalwechsel auf den Kanal Nr. 2 wird wieder die Vermutung der Umschalteinrichtung 5 bestätigt, und es kann ein schneller Kanalwechsel durchgeführt werden, da der Kanal Nr. 2 bereits in der Empfangseinrichtung 1 voreingestellt worden ist. Die Empfangseinrichtung 2 wird anschließend auf den Kanal Nr. 1 voreingestellt.

In Fig. 2 ist die für die Fernsehbildanzeige jeweils aktive Empfangseinrichtung bzw. der jeweils entsprechende aktive Decoder dick umrandet dargestellt.

Die vorliegende Erfindung kann sowohl auf analoge als auch auf digitale Fernsehgeräte angewendet werden, so daß anstelle der in Fig. 1 gezeigten Farbdecoder 9, 11 auch eine Realisierung für eine digitale Fernsehübertragung denkbar ist, wobei für jeden Kanal beispielsweise ein dem Übertragungsweg adäquater Kanaldecoder und ein MPEG-Decoder erforderlich sind. Darüber hinaus sind auch bereits Überlegungen bekannt, wonach zwei Kanäle mit lediglich einem MPEG-Decoder decodiert werden. Auch auf derartige Systeme kann selbstverständlich die vorliegende Erfindung angewendet werden. Zudem wird darauf hingewiesen, daß die obigen Ausführungen nicht für die Bildinformationen des Fernsehsignals, sondern auch für die Audioinformationen gelten. D.h. die im voraus eingestellte Empfangseinrichtung 1 oder 2 empfängt sowohl Bildinformationen als auch Audioinformationen des voreingestellten Kanals, so daß bei Umschalten auf diese Empfangseinrichtung von der Wiedergabeeinrichtung 3 anschließend ein entsprechendes Bild dieses Kanals mit passender Audioausgabe wiedergegeben werden kann.

In der Praxis hat sich herausgestellt, daß durch die zuvor beschriebene Voreinstellung der Empfangseinrichtungen 1 und 2 auf einen erwarteten Kanal mindestens 80% der bei herkömmlichen Fernsehgeräten für einen Kanalwechsel benötigten Zeit eingespart werden kann. Durch einen sogenannten Freilaufmodus herkömmlicher Bausteine, welche als Bildröhrenansteuerung 6 erhältlich sind, kann die für einen Kanalwechsel benötigte Zeit insgesamt auf Null reduziert werden.

Nachfolgend soll ein weiteres Ausführungsbeispiel der vorliegenden Erfindung erläutert werden.

So ist beispielsweise denkbar, daß über eine Empfangseinrichtung, beispielsweise die in Fig. 1 gezeigte Empfangseinrichtung 1, das einem bestimmten Kanal entsprechende Fernsehbild wiedergegeben wird. Mit einer anderen Empfangseinrichtung, beispielsweise der in Fig. 1 gezeigten Empfangseinrichtung 2, wird ein durch die Umschalteinrichtung 5 gesteuerter Suchlauf durchgeführt, wobei in der Empfangseinrichtung 2 mehrere Kanäle nacheinander eingestellt werden und das dem jeweils augenblicklich eingestellten Kanal entsprechende Fernsehbild in Form eines Kleinbilds ("Picture in Picture", PIP) oder Nebenbilds ("Split Screen") zusätzlich zu dem Hauptbild der Empfangseinrichtung 1 auf dem Bildschirm 7 dargestellt wird.

Erscheint während des Suchlaufs ein für den Zuschauer interessanter Kanal der Empfangseinrichtung 2, kann der Zuschauer den Suchlauf durch Drücken einer entsprechenden Taste seiner Fernbedienung oder beispielsweise auch durch ein akustisches Signal (z.B. per Spracherkennung) anhalten und durch eine weitere Aktion die Umschalteinrichtung 5 anweisen, das dem augenblicklich in der Empfangseinrichtung 2 eingestellten Kanal entsprechende Fernsehbild als Hauptbild auf dem Bildschirm 7 anzuzeigen. Anschließend kann auf Wunsch des Zuschauers auf analoge Art und Weise ein Suchlauf unter Verwendung der Empfangseinrichtung 1 durchgeführt werden.

Der zuvor beschriebene Suchlauf kann sämtliche verfügbare Kanäle umfassen. Ebenso ist jedoch auch denkbar, daß durch den Zuschauer diejenigen Kanäle programmiert und somit vorgegeben werden, die für den Suchlauf zu verwenden sind.

Diesbezüglich ist auch denkbar, daß mit jeder Fernsehsendung von dem entsprechenden Fernsehsender eine Kennung in Form eines Zusatzsignals übertragen wird, wobei die Kennung die jeweilige Fernsehsendung auf bestimmte Art und Weise charakterisiert. Von der Umschalteinrichtung 5 werden dann nur diejenigen Kanäle für den Suchlauf verwendet, deren Kennungen einem bestimmten Kriterium entsprechen. Auf diese Weise können für den Suchlauf nur Kanäle verwendet werden, deren Kennungen anzeigen, daß es sich bei der augenblicklichen Fernsehsendung beispielsweise um Sportsendungen oder Spielfilme etc. handelt, wenn der Zuschauer nur Sportsendungen oder Spielfilme sehen möchte.

## Patentansprüche

1. Verfahren zum Wechseln des Kanals einer Fernsehempfangsvorrichtung,
wobei die Fernsehempfangsvorrichtung mindestens zwei Empfangseinrichtungen (1,2) zum Empfangen jeweils eines Fernsehsignals und eine Wiedergabeeinrichtung (3) zum Darstellen eines einem empfangenen Fernsehsignal entsprechenden Bildes aufweist, wobei mindestens eine bestimmte Empfangseinrichtung (1,2) im voraus abhängig von in der Vergangenheit durchgeführten Kanalwechseln auf einen bestimmten Kanal eingestellt wird, welcher erwartungsgemäß in Zukunft ausgewählt werden könnte, und
wobei bei einem Kanalwechsel, durch den der bestimmte Kanal ausgewählt wird, von der Wiedergabeeinrichtung (3) ein dem von der im voraus eingestellten Empfangseinrichtung (1,2) empfangenen Fernsehsignal entsprechendes Bild dargestellt wird.

2. Verfahren nach Anspruch 1,
**dadurch gekennzeichnet,**
**daß** der Kanal, auf den die bestimmte Empfangseinrichtung (1,2) im voraus eingestellt wird, abhängig von dem zuletzt ausgewählten Kanal bestimmt wird.

3. Verfahren nach Anspruch 1 oder 2,
**dadurch gekennzeichnet,**
**daß** jedem empfangbaren Kanal eine Kanalnummer zugeordnet ist, daß für den Kanal, auf den die bestimmte Empfangseinrichtung (1,2) im voraus eingestellt wird, derjenige Kanal verwendet wird, dem die nächsthöhere Kanalnummer zugeordnet ist, falls mit dem unmittelbar davor durchgeführten Kanalwechsel auf einen Kanal mit einer höheren Kanalnummer gewechselt worden ist, und
**daß** für den Kanal, auf den die bestimmte Empfangseinrichtung (1,2) im voraus eingestellt wird, derjenige Kanal verwendet wird, dem die nächstniedrigere Kanalnummer zugeordnet ist, falls mit dem unmittelbar davor durchgeführten Kanalwechsel auf einen Kanal mit einer niedrigeren Kanalnummer gewechselt worden ist.

4. Verfahren nach einem der vorhergehenden Ansprüche,
**dadurch gekennzeichnet,**
**daß** bei einem Kanalwechsel überprüft wird, ob der durch den Kanalwechsel ausgewählte Kanal in der bestimmten Empfangseinrichtung (1,2) im voraus eingestellt worden ist, wobei:
(a) in diesem Fall von der Wiedergabeeinrichtung (3) ein dem von der im voraus eingestellten Empfangseinrichtung (1,2) empfangenen Fernsehsignal entsprechendes Bild dargestellt wird, und
(b) im anderen Fall von der Wiedergabeeinrichtung (3) das dem vor dem Kanalwechsel zuletzt eingestellten Kanal entsprechende Bild dargestellt wird, bis die bestimmte Empfangseinrichtung (1,2) auf den durch den Kanalwechsel ausgewählten Kanal eingestellt werden konnte, wobei dann von der Wiedergabeeinrichtung (3) ein dem von dieser Empfangseinrichtung (1,2) empfangenen Fernsehsignal entsprechendes Bild dargestellt wird.

5. Verfahren nach Anspruch 4,
**dadurch gekennzeichnet,**
**daß** im Fall (b) während der Darstellung des dem vor dem Kanalwechsel zuletzt eingestellten Kanal entsprechenden Bilds zusätzliche Informationen ausgegeben werden, welche einen Benutzer darüber informieren, daß augenblicklich der gewünschte Kanalwechsel durchgeführt wird.

6. Verfahren nach Anspruch 1,
**dadurch gekennzeichnet,**
**daß** die bestimmte Empfangseinrichtung (1,2) nacheinander auf eine Gruppe von mehreren unterschiedlichen Kanälen eingestellt wird, und
**daß** von der Wiedergabeeinrichtung (3) ein dem von dieser Empfangseinrichtung (1,2) auf dem jeweils eingestellten Kanal empfangenen Fernsehsignal entsprechendes Bild als ein Teilbild zusammen mit einem Hauptbild einer anderen Empfangseinrichtung (1,2), welche auf den zuletzt ausgewählten Kanal eingestellt worden ist, dargestellt wird.

7. Verfahren nach Anspruch 6,
**dadurch gekennzeichnet,**
**daß** die Gruppe der unterschiedlichen Kanäle, auf welche die bestimmte Empfangseinrichtung (1,2) nacheinander eingestellt wird, vorprogrammiert wird.

8. Verfahren nach Anspruch 6 oder 7,
**dadurch gekennzeichnet,**
**daß** die Gruppe der unterschiedlichen Kanäle, auf welche die bestimmte Empfangseinrichtung (1,2) nacheinander eingestellt wird, lediglich Kanäle umfaßt, deren augenblicklichen Fernsehsendungen ein bestimmtes Kriterium erfüllen.

9. Verfahren nach Anspruch 8,
**dadurch gekennzeichnet,**
**daß** für jede Fernsehsendung von einem entsprechenden Fernsehsender eine die Fernsehsendung charakterisierende Kennung übertragen und in der Fernsehempfangsvorrichtung ausgewertet wird, und
**daß** anhand der Kennung entschieden wird, ob der entsprechende Kanal der für den Suchlauf verwendeten Gruppe von Kanälen hinzugefügt wird oder nicht.

10. Verfahren nach einem der Ansprüche 6-9,
**dadurch gekennzeichnet,**
**daß** bei einem Kanalwechsel, durch den ein zu der Gruppe von Kanälen gehörender und in der bestimmten Empfangseinrichtung (1,2) augenblicklich eingestellter Kanal ausgewählt wird, von der Wiedergabeeinrichtung (3) das dem von dieser bestimmten Empfangseinrichtung (1,2) auf dem ausgewählten Kanal empfangenen Fernsehsignal entsprechende Bild als Hauptbild dargestellt wird.

11. Fernsehempfangsvorrichtung,
mit mindestens zwei Empfangseinrichtungen (1,2) zum Empfangen jeweils eines Fernsehsignals, und
mit einer Wiedergabeeinrichtung (3) zum Darstellen eines einem empfangenen Fernsehsignal entsprechenden Bildes, wobei Kanaleinstellmittel (5) vorgesehen sind, welche derart ausgestaltet sind, daß sie abhängig von in der Vergangenheit durchgeführten Kanalwechseln mindestens eine bestimmte Empfangseinrichtung (1,2) im voraus auf einen bestimmten Kanal, welcher erwartungsgemäß in Zukunft ausgewählt werden könnte, einstellen, und daß Steuermittel (5) vorgesehen sind, welchen die von den einzelnen Empfangseinrichtungen (1,2) empfangenen Fernsehsignale zugeführt sind und welche derart ausgestaltet sind, daß sie bei einem Kanalwechsel, durch den der bestimmte Kanal ausgewählt wird, der Wiedergabeeinrichtung (3) das von der im voraus eingestellten Empfangseinrichtung (1,2) empfangene Fernsehsignal zur Darstellung eines entsprechenden Bilds zuführen.

12. Fernsehempfangsvorrichtung nach Anspruch 11,
**dadurch gekennzeichnet,**
**daß** die Kanaleinstellmittel (5) und die Steuermittel (5) zur Durchführung des Verfahrens nach einem der Ansprüche 1-11 ausgestaltet sind.

## Claims

1. Method for changing the channel of a television set, with the television set having at least two receiving devices (1, 2) for each receiving a television signal and having a display device (3) for displaying a picture corresponding to a received television signal,
in which at least one specific receiving device (1, 2) is set in advance, on the basis of channel changes carried out in the past, to a specific channel which could be expected to be selected in the future, and in which, in the event of a channel change as a result of which the specific channel is selected, a picture corresponding to the television signal received by the receiving device (1, 2) which was set in advance is displayed by the display device (3).

2. Method according to Claim 1,
**characterized**
**in that** the channel to which the specific receiving device (1, 2) is set in advance, is established on the basis of the most recently selected channel.

3. Method according to Claim 1 or 2,
**characterized**
**in that** each channel which can be received has an associated channel number, in that the channel which has the next-higher channel number associated with it is used for the channel to which the specific receiving device (1, 2) is set in advance if the channel change carried out immediately prior to this resulted in a change to a channel having a higher channel number, and
**in that** the channel which has the next-lower channel number associated with it is used for the channel to which the specific receiving device (1, 2) is set in advance if the channel change carried out immediately prior to this resulted in a change to a channel having a lower channel number.

4. Method according to one of the preceding claims,
**characterized**
**in that** when a channel change takes place, a check is carried out to determine whether the channel selected by the channel change has been set in advance in the specific receiving device (1, 2),
with:
(a) a picture corresponding to the television signal received by the receiving device (1, 2) which has been set in advance being displayed by the display device (3) in this case, and
(b) the picture corresponding to the channel most recently set before the channel change being displayed on the display device (3) if this is not the case, until it has been possible to set the specific receiving device (1, 2) to the channel selected by the channel change, and with a picture corresponding to the television signal received by this receiving device (1, 2) then being displayed by the display device (3).

5. Method according to Claim 4,
**characterized**
**in that**, in case (b), while the picture corresponding to the channel which was most recently set before the channel change is being displayed, additional information is output which informs a user that the desired channel change is currently then carried out.

6. Method according to Claim 1,
**characterized**
**in that** the specific receiving device (1, 2) is set successively to a group of a number of different channels, and
**in that** a picture corresponding to the television signal received by this receiving device (1, 2) on the respectively set channel is displayed by the display device (3) as a partial picture together with a main picture from another receiving device (1, 2) which has been set to the most recently selected channel.

7. Method according to Claim 6,
**characterized**
**in that** the group of different channels to which the specific receiving device (1, 2) is set successively is pre-programmed.

8. Method according to Claim 6 or 7,
**characterized**
**in that** the group of different channels to which the specific receiving device (1, 2) is set successively comprises only channels whose current television programmes satisfy a specific criterion.

9. Method according to Claim 8,
**characterized**
**in that** an identifier which characterizes the television programme is transmitted by an appropriate television transmitter for each television programme and is evaluated in the television set, and
**in that** the identifier is used to decide whether the corresponding channel is or is not added to the group of channels used for the search.

10. Method according to one of Claims 6-9,
**characterized**
**in that**, in the event of a channel change by means of which a channel which belongs to the group of channels and is currently set in the specific receiving device (1, 2) is selected, the picture corresponding to the television signal received on the selected channel by this specific receiving device (1, 2) is displayed as the main picture by the display device (3).

11. Television set
having at least two receiving devices (1, 2) for each receiving a television signal, and
having a display device (3) for displaying a picture corresponding to a received television signal, in which
channel setting means (5) are provided which are designed in such a manner that, on the basis of channel changes carried out in the past, they set at least one specific receiving device (1, 2) to a specific channel which could be expected to be selected in the future, in advance, and in which control means (5) are provided to which the television signals received by the individual receiving devices (1, 2) are supplied and which are designed in such a manner that, in the event of a channel change by means of which a specific channel is selected, they supply the display device (3) with the television signal received by the receiving device (1, 2) which has been set in advance, in order to display a corresponding picture.

12. Television set according to Claim 11,
**characterized**
**in that** the channel setting means (5) and the control means (5) are designed for carrying out the method according to one of Claims 1-11.

## Revendications

1. Procédé de changement de canal dans un récepteur de télévision selon lequel,
le récepteur de télévision comporte au moins deux récepteurs (1, 2) pour recevoir chacun un signal vidéo et une installation de reproduction (3) pour afficher une image correspondant à un signal vidéo reçu,
au moins un récepteur déterminé (1, 2) étant réglé au préalable sur un certain canal en fonction des changements de canal effectués dans le passé, canal qui risque d'être sélectionné à l'avenir, et
selon lequel en cas de changement de canal avec sélection du canal déterminé, l'installation de reproduction (3) présente une image correspondant au signal vidéo reçu par le récepteur (1, 2) réglé au préalable.

2. Procédé selon la revendication 1,
**caractérisé en ce que**
le canal sur lequel est réglé au préalable un récepteur déterminé (1, 2) est défini en fonction du canal sélectionné en dernier lieu.

3. Procédé selon l'une quelconque des revendications 1 ou 2,
**caractérisé en ce qu'**
un numéro de canal est associé à chaque canal disponible,
pour le canal sur lequel on règle au préalable le récepteur déterminé (1, 2) on utilise le canal associé au numéro de canal directement au-dessus si pour le changement de canal effectué directement avant on a commuté sur un canal de numéro supérieur, et
pour le canal sur lequel est réglé au préalable le récepteur déterminé (1, 2) on utilise le canal associé au numéro de canal directement en dessous au cas où le changement de canal exécuté directement au préalable, a concerné un changement de canal vers un numéro de canal plus faible.

4. Procédé selon l'une quelconque des revendications précédentes,
**caractérisé en ce qu'**
en cas de changement de canal on vérifie si le canal sélectionné par le changement de canal a été réglé au préalable dans le récepteur défini (1, 2), et :
(a) dans ce cas l'installation de reproduction (3) affiche une image correspondant au signal vidéo reçu par le récepteur (1, 2) réglé au préalable, et
(b) dans l'autre cas, l'installation de reproduction (3) affiche une image correspondant au canal réglé en dernier lieu avant le changement de canal et cela jusqu'à ce que le récepteur déterminé (1, 2) soit stabilisé sur le canal sélectionné par le changement de canal, et ensuite l'installation de reproduction (3) affiche une image correspondant au signal vidéo reçu par ce récepteur (1, 2).

5. Procédé selon la revendication 4,
**caractérisé en ce que**
dans le cas (b), pendant l'affichage de l'image correspondant au canal réglé en dernier lieu avant le changement de canal, on affiche des informations supplémentaires informant l'utilisateur que le changement de canal demandé est en cours d'exécution.

6. Procédé selon la revendication 1,
**caractérisé en ce que**
le récepteur déterminé (1, 2) est réglé successivement sur un groupe de plusieurs canaux différents, et
l'installation de reproduction (3) affiche une image correspondant au signal vidéo reçu par ce récepteur (1, 2) par le canal sur lequel il est réglé, comme une image partielle avec une image principale d'un autre récepteur (1, 2) réglé sur le dernier canal sélectionné.

7. Procédé selon la revendication 6,
**caractérisé en ce que**
le groupe de canaux différents sur lesquels on peut régler successivement différentes installations de réception (1, 2) est préprogrammé.

8. Procédé selon l'une quelconque des revendications 6 ou 7,
**caractérisé en ce que**
le groupe de canaux différents sur lesquels se règle successivement un certain récepteur (1, 2) comprend uniquement les canaux dont les émissions vidéo instantanées répondent à un certain critère.

9. Procédé selon la revendication 8,
**caractérisé en ce que**
pour chaque émission de télévision l'émetteur de télévision correspondant transmet une référence caractérisant l'émission de télévision et cette référence est exploitée dans le récepteur, et
à l'aide de cette référence on décide si le canal correspondant est ou non ajouté au groupe de canaux utilisés pour la recherche.

10. Procédé selon l'une quelconque des revendications 6 à 9,
**caractérisé en ce qu'**
en cas de changement de canal on sélectionne un canal appartenant au groupe de canaux et réglé instantanément dans le récepteur déterminé (1, 2) et l'installation de reproduction (3) affiche comme image principale l'image correspondant au signal vidéo reçu du canal sélectionné par ce récepteur déterminé (1, 2).

11. Récepteur de télévision comportant au moins deux récepteurs (1, 2) pour recevoir chacun un signal vidéo, et
une installation de reproduction (3) pour afficher l'image correspondant à l'un des signaux vidéo reçus,
des moyens de réglage de canal (5) étant prévus pour qu'en fonction des changements de canaux effectués antérieurement, au moins un certain récepteur (1, 2) peut être réglé au préalable sur un certain canal qui risque d'être sélectionné ultérieurement, et
des moyens de commande (5) sont prévus qui reçoivent les signaux vidéo reçus par les différents récepteurs (1, 2), ces moyens étant conçus pour qu'en cas de changement de canal qui correspond à la sélection du canal déterminé, l'installation de reproduction (3) reçoit l'image correspondant au signal vidéo reçu du récepteur (1, 2) réglé au préalable pour afficher cette image.

12. Récepteur de télévision selon la revendication 1,
**caractérisé en ce que**
les moyens de réglage de canal et les moyens de commande (5) sont conçus pour la mise en oeuvre du procédé selon l'une quelconque des revendications 1 à 10.
